(19) **Europäisches Patentamt / European Patent Office / Office européen des brevets**

(11) **EP 3 387 501 B1**

(12) **FASCICULE DE BREVET EUROPEEN**

(45) Date de publication et mention de la délivrance du brevet:
**29.04.2020 Bulletin 2020/18**

(21) Numéro de dépôt: **16808702.1**

(22) Date de dépôt: **09.12.2016**

(51) Int Cl.:
**G05B 23/02** *(2006.01)*

(86) Numéro de dépôt international:
**PCT/EP2016/080535**

(87) Numéro de publication internationale:
**WO 2017/098030 (15.06.2017 Gazette 2017/24)**

(54) **PROCÉDÉ DE DÉTECTION D'UN COMPORTEMENT ATYPIQUE DE PARAMÈTRES DE TÉLÉMESURE, PRODUIT PROGRAMME D'ORDINATEUR ET DISPOSITIF ASSOCIÉS**

VERFAHREN ZUM ERKENNEN EINES UNTYPISCHEN VERHALTENS VON TELEMETRIEPARAMETERN SOWIE ZUGEHÖRIGES COMPUTERPROGRAMMPRODUKT UND VORRICHTUNG

METHOD FOR DETECTING ATYPICAL BEHAVIOUR OF TELEMETRY PARAMETERS, AND ASSOCIATED COMPUTER PROGRAM PRODUCT AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2015 FR 1562052**

(43) Date de publication de la demande:
**17.10.2018 Bulletin 2018/42**

(73) Titulaires:
- **Centre National d'Etudes Spatiales**
  **75001 Paris (FR)**
- **Institut National Polytechnique de Toulouse**
  **31400 Toulouse (FR)**
- **Centre National de la Recherche Scientifique**
  **75016 Paris (FR)**
- **Université De Nice Sophia Antipolis**
  **06000 Nice (FR)**
- **Observatoire de la Côte d'Azur**
  **06304 Nice Cedex 4 (FR)**

(72) Inventeurs:
- **FUERTES, Sylvain**
  **31400 Toulouse (FR)**
- **PICART, Gilles**
  **31320 Castanet Tolosan (FR)**
- **CHAARI, Lotfi**
  **31000 Toulouse (FR)**
- **FERRARI, André**
  **06000 Nice (FR)**
- **RICHARD, Cedric**
  **06000 Nice (FR)**
- **TOURNERET, Jean-Yves**
  **31500 Toulouse (FR)**

(74) Mandataire: **Delorme, Nicolas et al**
  **Cabinet Germain & Maureau**
  **12, rue Boileau**
  **BP 6153**
  **69466 Lyon Cedex 06 (FR)**

(56) Documents cités:
**EP-A1- 1 892 597      WO-A1-2013/010569**
**DE-A1-102008 058 422      DE-A1-102011 117 974**

EP 3 387 501 B1

**Description**

La présente invention concerne un procédé de détection d'un comportement atypique de paramètres de télémesure.

Le procédé selon l'invention est notamment applicable dans le traitement des données de télémesure issues d'un satellite ou tout autre engin aérospatial. De manière générale, ces données sont transmises vers un centre de traitement de données situé par exemple sur la surface terrestre.

Les données de télémesure comprennent notamment une pluralité de paramètres transmis du satellite vers le sol.

Au moins certains de ces paramètres sont relatifs à la santé du satellite et sont mesurés via des dispositifs d'observation prévus à cet effet et embarqués dans le satellite. Ces paramètres sont ensuite transmis au sol où ils sont analysés à des fins de surveillance du fonctionnement du satellite.

À titre d'exemple, un tel paramètre comprend la température d'un compartiment du satellite ou la pression dans ce compartiment, ou encore tout autre paramètre relatif au fonctionnement de différents composants du satellite.

D'autres paramètres sont relatifs à la mission du satellite et comprennent par exemple des mesures acquises à l'extérieur du satellite. À titre d'exemple, un tel paramètre comprend la température d'une face extérieure du satellite ou bien le flux solaire reçu par cette face.

De manière générale, on distingue trois types de paramètres en fonction de la nature de ces paramètres. Ainsi, chaque paramètre correspond à un type analogique, à un type symbolique ou à un type quasi-symbolique.

Chaque mesure d'un paramètre de type analogique correspond à une valeur numérique choisie dans un intervalle de valeurs numériques prédéterminé pour ce paramètre.

Chaque mesure d'un paramètre de type symbolique correspond à une valeur choisie parmi un nombre fini d'états prédéterminés pour ce paramètre.

Chaque mesure d'un paramètre de type quasi-symbolique correspond à une valeur numérique choisie parmi un nombre fini d'états numériques prédéterminés pour ce paramètre ou à une valeur numérique choisie dans au moins un intervalle de valeurs numériques comportant l'un desdits états numériques.

Les mesures des paramètres sont acquises et transmises périodiquement. Le nombre de mesures par période et par paramètre est compris par exemple entre 1 000 et 10 000.

Le traitement de ces mesures au sol comprend entre autres, la détection d'un comportement atypique d'au moins certains des paramètres.

On entend par « comportement atypique » d'un paramètre, des mesures de ce paramètre dont les valeurs sont inattendues dans le cadre d'une exploitation nominale du satellite. Ainsi, par exemple, un comportement atypique d'un paramètre signifie une défaillance dans le dispositif de mesure associé ou une défaillance dans tout autre composant du satellite apte à causer les valeurs inattendues.

On conçoit alors que la détection à temps d'un comportement atypique d'un paramètre permet parfois d'éviter la propagation d'une défaillance à d'autres composants du satellite et constitue ainsi un enjeu important pour la surveillance du satellite.

Différentes méthodes de détection d'un comportement atypique de paramètres de télémesure existent dans l'état de la technique.

Parmi elles, la méthode la plus répandue et connue sous le terme anglais « Out-Of-Limits » (OOL ou « hors limites » en français), consiste à analyser automatiquement un sous-ensemble des paramètres identifiés comme critiques et à comparer chaque mesure de ces paramètres avec une plage de fonctionnement attendue.

De manière générale, chaque plage de fonctionnement est définie *a priori* par exemple par le constructeur du composant correspondant du satellite. Ceci rend alors cette solution peu flexible. De plus, une connaissance approfondie du satellite et de ses composants est nécessaire afin de définir ou de modifier ces plages de fonctionnement.

Une solution permettant de remédier à ces inconvénients est décrite dans le document WO 2013/010569 A1.

Plus particulièrement, cette solution propose d'utiliser des mesures nominales des paramètres acquises lors d'une exploitation nominale du satellite pour déterminer des comportements atypiques de ces paramètres postérieurement à partir des mesures de test.

Pour ce faire, les intervalles temporels respectifs d'acquisition des mesures nominales et des mesures de test sont divisés en une pluralité de fenêtres temporelles. Pour chaque fenêtre temporelle, des descripteurs représentatifs du comportement des paramètres sont calculés. Puis, les descripteurs correspondant aux mesures de test sont comparés à ceux correspondant aux mesures nominales afin d'établir une probabilité d'anomalie pour chaque fenêtre temporelle correspondant aux mesures de test.

Toutefois, cette solution n'est pas complètement satisfaisante. En effet, l'analyse des mesures selon cette méthode est relativement lente et en particulier, ne permet pas de traiter d'une manière rapide, un grand nombre de mesures, par exemple supérieur à 1 000, avec un grand nombre de descripteurs, par exemple supérieur à 5. En outre, cette solution n'est pas directement applicable à l'analyse de paramètres symboliques dont les mesures sont choisies parmi un nombre fini d'états.

Un but de la présente invention est de proposer un procédé de détection d'un comportement atypique de paramètres de télémesure remédiant à ces inconvénients.

À cet effet, l'invention a pour objet un procédé de détection d'un comportement atypique de paramètres de télémesure, chaque paramètre étant mesuré pendant un intervalle temporel d'apprentissage et un intervalle temporel de détection postérieur à l'intervalle temporel d'apprentissage, le procédé comportant pour chaque paramètre une phase d'apprentissage et une phase de détection ;

la phase d'apprentissage comportant la détermination d'une frontière de comportement nominal du paramètre correspondant à partir des mesures de ce paramètre acquises pendant l'intervalle d'apprentissage ;

la phase de détection comportant les étapes suivantes :

- diviser l'intervalle temporel de détection en une pluralité de fenêtres temporelles ;
- pour chaque fenêtre temporelle obtenue, calculer un jeu de descripteurs représentatifs du comportement du paramètre correspondant, les descripteurs étant calculés en fonction des mesures de ce paramètre dans cette fenêtre temporelle, et former un vecteur initial de descripteurs à partir des descripteurs calculés ;
- normaliser les vecteurs initiaux de descripteurs ;
- pour chaque vecteur initial de descripteurs, réduire la dimension de ce vecteur initial de descripteurs pour former un vecteur réduit de descripteurs, chaque composante du vecteur réduit de descripteurs correspondant à une combinaison linéaire des composantes du vecteur initial de descripteurs à partir duquel ce vecteur réduit de descripteurs a été formé ;
- déterminer l'appartenance de chaque vecteur réduit de descripteurs à un domaine délimité par la frontière de comportement nominal du paramètre correspondant ;
- lorsqu'un vecteur réduit de descripteurs est à l'extérieur du domaine, générer une alerte correspondant à un comportement atypique du paramètre correspondant dans la fenêtre temporelle correspondant à ce vecteur réduit de descripteurs.

Suivant d'autres aspects avantageux de l'invention, le procédé comprend une ou plusieurs des caractéristiques suivantes, prise(s) isolément ou suivant toutes les combinaisons techniquement possibles :

- la phase d'apprentissage comporte les étapes suivantes :

    - diviser l'intervalle temporel d'apprentissage en une pluralité de fenêtres temporelles ;
    - pour chaque fenêtre temporelle obtenue, calculer un jeu de descripteurs représentatifs du comportement du paramètre correspondant, les descripteurs étant calculés en fonction des mesures de ce paramètre dans cette fenêtre temporelle, et former un vecteur initial de descripteurs à partir des descripteurs calculés ;
    - normaliser les vecteurs initiaux de descripteurs ;
    - pour chaque vecteur initial de descripteurs, réduire la dimension de ce vecteur initial de descripteurs pour former un vecteur réduit de descripteurs, chaque composante du vecteur réduit de descripteurs correspondant à une combinaison linéaire des composantes du vecteur initial de descripteurs à partir duquel ce vecteur réduit de descripteurs a été formé ;
    - déterminer une frontière de comportement nominal du paramètre correspondant en fonction des vecteurs réduits de descripteurs correspondants, ladite frontière délimitant un domaine comportant une majorité desdits vecteurs réduits ;

- chaque paramètre est associé à un type, chaque type étant choisi dans un groupe consistant en :

    - type analogique pour un paramètre dont chaque mesure correspond à une valeur numérique choisie dans un intervalle de valeurs numériques prédéterminé pour le paramètre correspondant ;
    - type symbolique pour un paramètre dont chaque mesure correspond à une valeur choisie parmi un nombre fini d'états prédéterminés pour le paramètre correspondant ;
    - type quasi-symbolique pour un paramètre dont chaque mesure correspond à une valeur numérique choisie parmi un nombre fini d'états numériques prédéterminés pour le paramètre correspondant ou à une valeur numérique choisie dans au moins un intervalle de valeurs numériques comportant l'un desdits états numériques ;

- chaque jeu de descripteurs est choisi en fonction du type du paramètre pour lequel ce jeu est calculé ;
- le jeu de descripteurs pour chaque paramètre de type symbolique ou de type quasi-symbolique comprend des descripteurs calculés en fonction de la fréquence d'apparition de chaque état dans la fenêtre temporelle correspondante et/ou de la probabilité de transition entre les différents états dans la fenêtre temporelle correspondante ;

- le jeu de descripteurs pour au moins un type de paramètre comprend au moins un descripteur fréquentiel représentatif du comportement fréquentiel du paramètre correspondant ;
- le descripteur fréquentiel est calculé en fonction de l'énergie contenue dans plusieurs bandes de fréquence des mesures du paramètre correspondant dans la fenêtre temporelle correspondante ;
- le jeu de descripteurs pour au moins un type de paramètre comprend au moins un descripteur représentatif du nombre de passages par une valeur moyenne des mesures du paramètre correspondant dans la fenêtre temporelle correspondante ;
- la frontière de comportement nominal de chaque paramètre est déterminée en fonction d'un premier facteur déterminant le pourcentage des vecteurs réduits autorisés à être à l'extérieur du domaine délimité par cette frontière, et d'un deuxième facteur déterminant la régularité de la frontière ;
- chaque paramètre est mesuré par des moyens de mesure embarqués dans un satellite ;
- les mesures d'au moins un paramètre sont analysées par un centre de traitement distant du satellite ou embarqué dans celui-ci ;
- la réduction de la dimension de chaque vecteur initial de descripteurs lors de la phase de détection comprend la projection de ce vecteur initial sur un espace de dimension réduite déterminé par les vecteurs réduits obtenus lors la réduction de la dimension de chaque vecteur initial de descripteurs lors de la phase d'apprentissage ;
- la normalisation des vecteurs initiaux de descripteurs lors de la phase d'apprentissage comprend le calcul des moyennes et des écart-types des composantes de ces vecteurs initiaux de descripteurs ;
- la normalisation des vecteurs initiaux de descripteurs lors de la phase de détection s'effectue à partir des moyennes et des écart-types calculés lors de la phase d'apprentissage.

L'invention a également pour objet un produit programme d'ordinateur comportant des instructions logicielles qui, lorsque mis en œuvre par un équipement informatique, met en œuvre le procédé tel que décrit.

L'invention a également pour objet un dispositif de détection d'un comportement atypique de paramètres de télémesure, chaque paramètre étant mesuré pendant un intervalle temporel d'apprentissage et un intervalle temporel de détection postérieur à l'intervalle temporel d'apprentissage, le dispositif comportant un module d'apprentissage et un module de détection ;

pour chaque paramètre, le module d'apprentissage étant apte à déterminer une frontière de comportement nominal du paramètre correspondant à partir des mesures de ce paramètre acquises pendant l'intervalle d'apprentissage ;

pour chaque paramètre, le module de détection étant apte à :

- diviser l'intervalle temporel de détection en une pluralité de fenêtres temporelles ;
- pour chaque fenêtre temporelle obtenue, calculer un jeu de descripteurs représentatifs du comportement du paramètre correspondant, les descripteurs étant calculés en fonction des mesures de ce paramètre dans cette fenêtre temporelle, et former un vecteur initial de descripteurs à partir des descripteurs calculés ;
- normaliser les vecteurs initiaux de descripteurs ;
- pour chaque vecteur initial de descripteurs, réduire la dimension de ce vecteur initial de descripteurs pour former un vecteur réduit de descripteurs, chaque composante du vecteur réduit de descripteurs correspondant à une combinaison linéaire des composantes du vecteur initial de descripteurs à partir duquel ce vecteur réduit de descripteurs a été formé ;
- déterminer l'appartenance de chaque vecteur réduit de descripteurs à un domaine délimité par la frontière de comportement nominal du paramètre correspondant ;
- lorsqu'un vecteur réduit de descripteurs est à l'extérieur du domaine, générer une alerte correspondant à un comportement atypique du paramètre correspondant dans la fenêtre temporelle correspondant à ce vecteur réduit de descripteurs.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue schématique d'une architecture de télémesure, l'architecture comportant un dispositif de détection d'un comportement atypique de paramètres de télémesure, selon l'invention ;
- les figures 2 à 4 sont des vues schématiques illustrant différents types de paramètres analysés par le dispositif de détection de la figure 1 ;
- la figure 5 est un organigramme d'une phase d'apprentissage d'un procédé de détection d'un comportement atypique de paramètres de télémesure mis en œuvre par le dispositif de détection de la figure 1 ; et
- la figure 6 est un organigramme d'une phase de détection du même procédé de détection.

Dans la suite de la description, l'expression « sensiblement égal à » s'entend comme une relation d'égalité à plus ou moins 10 %.

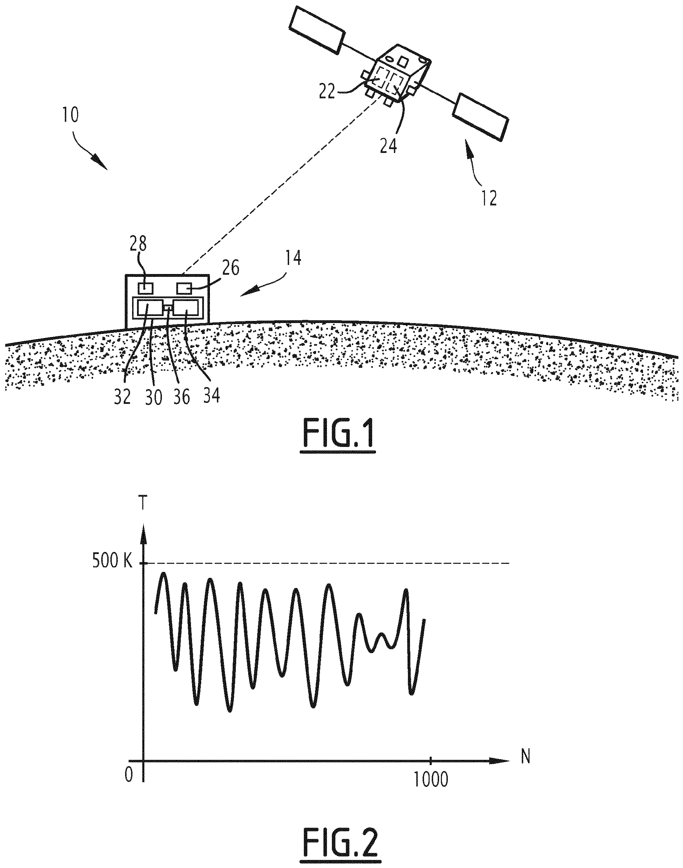

L'architecture de télémesure 10 de la figure 1 comporte un satellite 12 situé par exemple sur une orbite géostationnaire et un centre de traitement 14 situé par exemple sur la surface terrestre.

Le satellite 12 comporte des moyens de mesure 22 de paramètres de télémesure et des moyens de transmission 24 des mesures acquises vers le centre de traitement 14.

En particulier, les moyens de mesure 22 sont aptes à acquérir des mesures des paramètres de manière périodique via différents détecteurs prévus à cet effet dans le satellite 12 et connus dans l'art.

Au moins certains des paramètres de télémesure sont relatifs à la santé du satellite 12. Ainsi, par exemple, ces paramètres comprennent la température d'un compartiment du satellite, la pression dans ce compartiment, et tout autre paramètre relatif au fonctionnement de différents composants du satellite 12.

D'autres paramètres de télémesure sont relatifs à la mission du satellite 12 et comprennent par exemple des mesures acquises à l'extérieur du satellite 12. Ainsi, par exemple, ces paramètres comprennent la température d'une face extérieure du satellite, le flux solaire reçu par cette face, etc.

Chaque paramètre est associé à un type caractérisant la nature de ce paramètre. Chaque type est choisi dans un groupe consistant en :

- type analogique ;
- type symbolique ; et
- type quasi-symbolique.

Chaque mesure d'un paramètre de type analogique correspond à une valeur numérique choisie dans un intervalle de valeurs numériques prédéterminé pour ce paramètre.

Ainsi, lorsque ce paramètre correspond à la température ambiante à l'extérieur du satellite 12, l'intervalle de valeurs numériques de ce paramètre s'étend par exemple de 0 à quelques centaines de kelvins et contient un nombre fini de valeurs qui est déterminé par le pas d'échantillonnage de la température. Chaque mesure de ce paramètre est apte à prendre une valeur numérique quelconque parmi ces valeurs.

Un exemple de comportement d'un tel paramètre est illustré sur la figure 2. En particulier, selon cette figure chaque valeur numérique (l'axe OT) de l'une des 1 000 mesures (l'axe ON) est comprise dans l'intervalle [0 ; 500K].

Chaque mesure d'un paramètre de type symbolique correspond à une valeur choisie parmi un nombre fini d'états prédéterminés pour ce paramètre. Chaque état correspond par exemple à une valeur numérique ou à une chaîne de caractères représentant cet état.

Ainsi, par exemple, pour un paramètre caractérisant le fonctionnement d'un composant du satellite 12, trois états « 1 », « 0 » et « -1 » sont définis. L'état « 1 » correspond au fonctionnement normal de ce composant, l'état « 0 » au fonctionnement dégradé et l'état « -1 » au fonctionnement défaillant de ce composant.

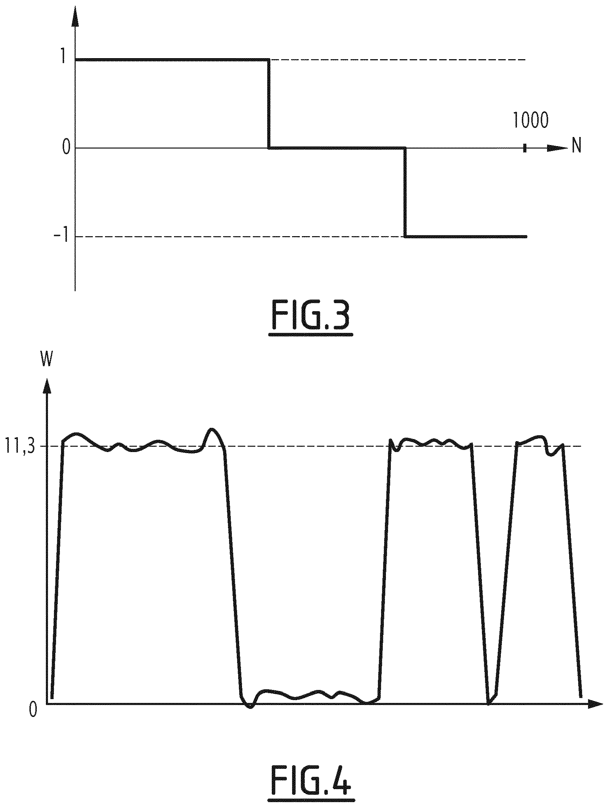

Un exemple de comportement d'un tel paramètre est illustré sur la figure 3. Dans cette figure, les mesures de ce paramètre montrent que le composant correspondant est d'abord dans l'état de fonctionnement normal, puis dégradé et puis défaillant.

Chaque mesure d'un paramètre de type quasi-symbolique correspond à une valeur numérique choisie parmi un nombre fini d'états numériques prédéterminés pour ce paramètre ou à une valeur numérique choisie dans au moins un intervalle de valeurs numériques comportant l'un desdits états numériques.

Ainsi, par exemple, pour un paramètre caractérisant la puissance électrique consommée par un équipement embarqué dans le satellite 12, deux états « 11,3 W » et « 0 W » sont définis. Lorsque les mesures de ce paramètre oscillent autour de l'état « 0 W », l'équipement est éteint. Lorsque les mesures de ce paramètre oscillent autour de l'état « 11,3 W », l'équipement est allumé. Si la fréquence des transitions entre les états « 0 W » et « 11,3 W » augmente de manière significative, cela signifie une défaillance de l'équipement. Un exemple de comportement d'un tel paramètre est illustré sur la figure 4.

Les moyens de transmission 24 permettent de transmettre les mesures acquises vers le centre de traitement 14. Ces mesures sont par exemple transmises avec une périodicité journalière. Le nombre de mesures transmises pour chaque période et pour chaque paramètre est par exemple compris entre 1 000 et 10 000.

Les moyens de transmission 24 sont notamment des moyens de transmission radioélectrique connus en soi.

Le centre de traitement 14 permet d'acquérir les mesures transmises par le satellite 12 et de traiter ces mesures pour notamment détecter un comportement atypique d'un ou plusieurs paramètres correspondant à ces mesures.

On entend par « comportement atypique » d'un paramètre, des mesures de ce paramètre dont les valeurs sont inattendues dans le cadre d'une exploitation nominale du satellite 12 ou de ses composants.

À cet effet, en référence à la figure 1, le centre de traitement 14 comporte des moyens d'acquisition 26, des moyens de stockage 28 et un dispositif de détection 30 d'un comportement atypique de paramètres de télémesure selon l'invention.

Les moyens d'acquisition 26 sont des moyens de communication radioélectrique aptes à communiquer avec les moyens de transmission 24 du satellite 12.

Les moyens d'acquisition 26 sont aptes en outre à transmettre des données acquises du satellite 12 vers les moyens de stockage 28 pour stocker ces données.

Le dispositif de détection 30 met en œuvre un procédé de détection d'un comportement atypique de paramètres de télémesure selon l'invention, comme ceci sera expliqué par la suite.

En particulier, le dispositif de détection 30 comporte un module d'apprentissage 32, un module de détection 34 et un module d'échange 36.

Selon l'exemple de réalisation de la figure 1, le dispositif de détection 30 est un calculateur et les modules d'apprentissage 32 et de détection 34 sont des logiciels mis en œuvre par ce calculateur. Le module d'échange 36 est une mémoire du calculateur permettant d'échanger des informations numériques entre les modules d'apprentissage 32 et de détection 34.

Selon un autre exemple de réalisation, les modules d'apprentissage 32 et de détection 34 se présentent sous la forme des calculateurs indépendants aptes à mettre en œuvre les différentes phases du procédé expliquées par la suite. En complément, ces calculateurs sont disposés dans des endroits géographiques distincts.

Selon ce denier exemple de réalisation, le module d'échange 36 est une mémoire externe accessible à partir des deux modules 32 et 34.

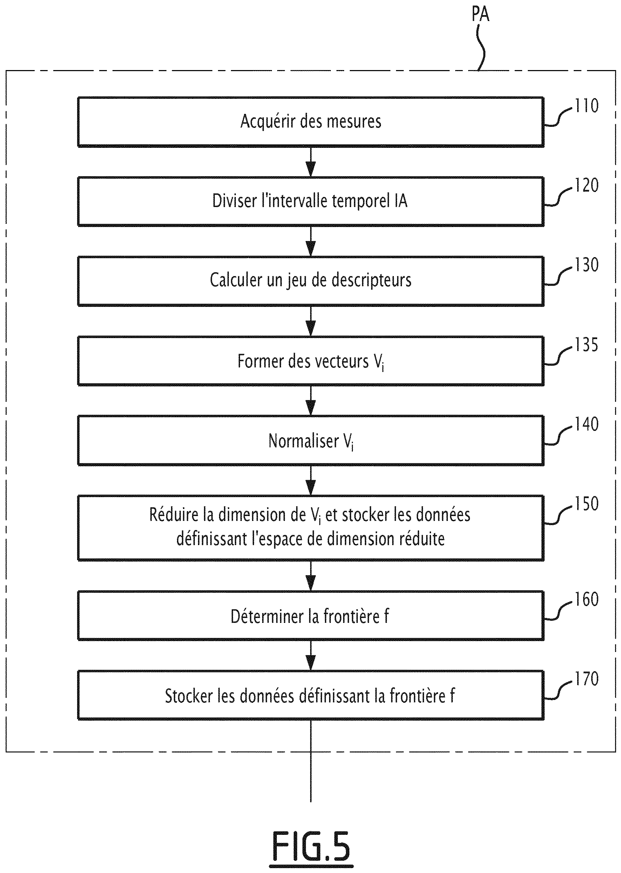

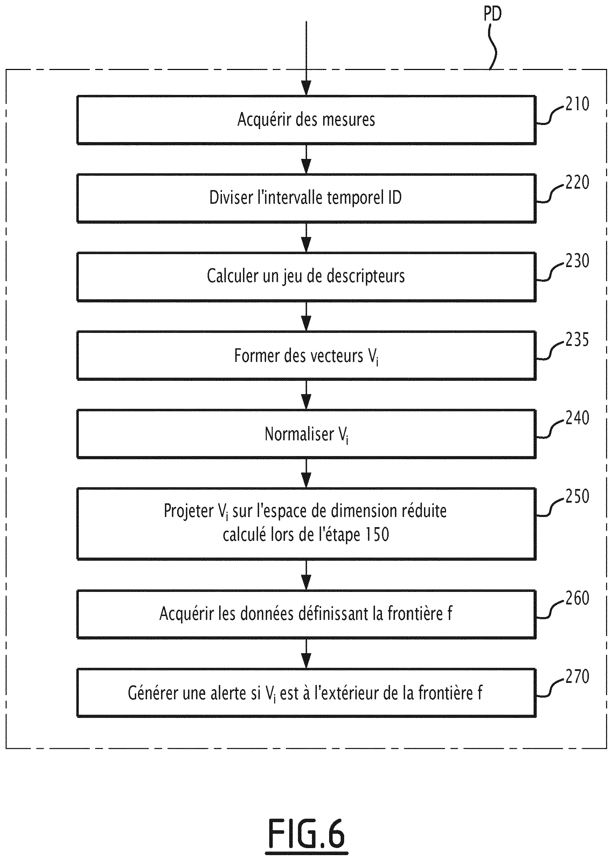

Le procédé de détection selon l'invention va désormais être expliqué en référence aux figures 5 et 6 illustrant des organigrammes de ses étapes.

Pour chaque paramètre, le procédé de détection comporte une phase d'apprentissage PA et une phase de détection PD.

La phase d'apprentissage PA permet de déterminer une frontière de comportement nominal du paramètre correspondant et la phase de détection PD permet de détecter un comportement atypique de ce paramètre en utilisant la frontière de comportement nominal de ce paramètre déterminé lors de la phase d'apprentissage PA.

Ainsi, la phase de détection PD est apte à être exécutée indépendamment de la phase d'apprentissage PA après que celle-ci a été déjà exécutée au moins une fois pour le paramètre correspondant.

La phase d'apprentissage PA est mise en œuvre par le module d'apprentissage 32, et la phase de détection PD est mise en œuvre par le module de détection 34.

Initialement, des mesures correspondant à différents paramètres sont prises par les moyens de mesure 22 du satellite 12. En particulier, ces mesures sont prises pendant un intervalle temporel d'apprentissage IA déterminé pour chaque paramètre.

La durée de chaque intervalle temporel d'apprentissage IA est par exemple de l'ordre de plusieurs mois et de préférence, sensiblement égale à 3 mois.

Avantageusement, l'intervalle temporel d'apprentissage IA correspond à une période de fonctionnement du satellite 12 et de ses composants considérée comme nominale.

Puis, ces mesures sont transmises au centre de traitement 14 via des moyens de transmission 24, sont stockées dans les moyens de stockage 28 et sont traitées par le dispositif de détection 30 qui commande l'exécution de la phase d'apprentissage PA pour chaque paramètre dont les mesures ont été acquises.

Un organigramme des étapes de la phase d'apprentissage PA est illustré sur la figure 5.

Lors de l'étape initiale 110 de la phase d'apprentissage PA, le module d'apprentissage 32 du dispositif de détection 30 acquiert les mesures du paramètre correspondant prises pendant l'intervalle d'apprentissage IA correspondant.

Lors de l'étape 120 suivante, le module d'apprentissage 32 divise l'intervalle temporel d'apprentissage IA en une pluralité de fenêtres temporelles $F_i$, l'indice $i$ correspondant au numéro de la fenêtre temporelle considéré variant entre 1 et le nombre total de fenêtres temporelles $N$. La durée de chaque fenêtre temporelle $F_i$ est fixe et par exemple sensiblement égale à 100 min.

Ainsi, lorsque la durée de l'intervalle temporel d'apprentissage IA est sensiblement égale à 15 jours, le nombre total de fenêtres temporelles $N$ pour le paramètre correspondant est sensiblement égal à 226.

Chaque fenêtre temporelle $F_i$ comprend une pluralité de mesures prises pendant l'intervalle temporel correspondant à cette fenêtre temporelle $F_i$. Ces mesures seront dénotées par la suite par le symbole $x_l$ où l'indice $l$ varie entre 1 et $M$, $M$ étant le nombre total de mesures comprises dans la fenêtre temporelle $F_i$ correspondante.

Selon une variante de réalisation, la durée fixe de chaque fenêtre temporelle $F_i$ est un paramètre de l'étape 120 réglable par un utilisateur.

Lors de l'étape 130 suivante, pour chaque fenêtre temporelle $F_i$ obtenue, le module d'apprentissage 32 calcule un jeu de descripteurs $J_p$.

Chaque descripteur $D_j$ est apte à représenter le comportement du paramètre correspondant dans la fenêtre temporelle $F_i$ correspondante.

Chaque descripteur $D_j$ est calculé en fonction des mesures comprises dans la fenêtre temporelle $F_i$ correspondante.

Chaque descripteur $D_j$ est choisi dans le groupe comprenant par exemple les descripteurs suivants :

- descripteur $D_1$ correspondant au maximum des mesures dans la fenêtre temporelle $F_i$ correspondante et calculé par la formule suivante :

$$D_1 = \max_l x_l \, ;$$

- descripteur $D_2$ correspondant au minimum des mesures dans la fenêtre temporelle $F_i$ correspondante et calculé par la formule suivante :

$$D_2 = \min_l x_l \, ;$$

- descripteur $D_3$ correspondant à la moyenne des mesures dans la fenêtre temporelle $F_i$ correspondante et calculé par la formule suivante :

$$D_3 = \bar{x} = \frac{1}{M} \sum_{l=1}^{M} x_l \, ;$$

- descripteur $D_4$ correspondant au passage par la moyenne des mesures dans la fenêtre temporelle $F_i$ correspondante et calculé par la formule suivante :

$$D_4 = P = \frac{1}{M} \sum_{l=1}^{M-1} (1_{x_l \leq \bar{x}} * 1_{x_{l+1} > \bar{x}} + 1_{x_l > \bar{x}} * 1_{x_{l+1} \leq \bar{x}})$$

où $1_{a>b}$ = 1 si $a > b$ et $1_{a>b}$ = 0 sinon, et $1_{a \leq b}$ = 1 si $a \leq b$ et $1_{a \leq b}$ = 0 sinon.
- descripteur $D_5$ correspondant à l'écart-type des mesures dans la fenêtre temporelle $F_i$ correspondante et calculé par la formule suivante :

$$D_5 = \sigma_x = \sqrt{\frac{1}{M} \sum_{l=1}^{M} (x_l - \bar{x})^2} \, ;$$

- descripteur $D_6$ correspondant au coefficient d'asymétrie (« skewness » en anglais) des mesures dans la fenêtre temporelle $F_i$ correspondante et calculé par la formule suivante :

$$D_6 = S = \left( \frac{1}{M} \sum_{l=1}^{M} (x_l - \bar{x})^3 \right) / \left( \frac{1}{M-1} \sum_{l=1}^{M} (x_l - \bar{x})^2 \right)^{3/2} \, ;$$

- descripteur $D_7$ correspondant au coefficient d'aplatissement (connu également sous le terme « kurtosis ») des mesures dans la fenêtre temporelle $F_i$ correspondante et calculé par la formule suivante :

$$D_7 = K = \left( \frac{1}{M} \sum_{l=1}^{M} (x_l - \bar{x})^4 \right) / \left( \frac{1}{M-1} \sum_{l=1}^{M} (x_l - \bar{x})^2 \right)^{2} \, ;$$

- descripteur $D_8$ correspondant à l'énergie des mesures dans la fenêtre temporelle $F_i$ correspondante et calculé par la formule suivante :

$$D_8 = E = \frac{1}{M} \sum_{l=1}^{M} x_l^2 \; ;$$

- descripteur $D_9$ représentatif du comportement fréquentiel des mesures dans la fenêtre temporelle $F_i$ correspondante et calculé par la formule suivante :

$$D_9 = \mathrm{Freq}_j = \frac{1}{N_j} \sum_{k=0}^{\frac{N_{FFT}}{2}} \left| X\left(\frac{k}{N_{FFT}}\right) \right|^2 I_{\left[\frac{j-1}{2K}, \frac{j}{2K}\right[} \left(\frac{k}{N_{FFT}}\right).$$

Avec $N_j$ le nombre de bins fréquentiels contenus dans l'intervalle $\left[\frac{j-1}{2K}, \frac{j}{2K}\right[$, c'est-à-dire :

$$N_j = \sum_{k=0}^{\frac{N_{FFT}}{2}} I_{\left[\frac{j-1}{2K}, \frac{j}{2K}\right[} \left(\frac{k}{N_{FFT}}\right)$$

Avec les notations suivantes :

- $\mathrm{Freq}_j$ est le $j^{ème}$ descripteur fréquentiel correspondant à l'énergie dans la $j^{ème}$ bande spectrale ;
- $X(\tilde{f})$ est la transformée de Fourier rapide de $[x_1, ... x_M]$ exprimée en fréquences normalisées (i.e. $\tilde{f} \in [0,1/2]$) ;
- $I_{\left[\frac{j-1}{2K}, \frac{j}{2K}\right[}(x)$ est la fonction indicatrice sur l'intervalle $\left[\frac{j-1}{2K}, \frac{j}{2K}\right[$ ;
- K est le nombre de bandes spectrales choisi, par exemple, égal à 5.
- $N_{FFT}$ est le nombre de points utilisé pour calculer la transformée de Fourier rapide
- $j = 1, ...,K$ désigne l'indice associé à la $j^{ème}$ bande spectrale.
- descripteur $D_{10}$ caractérisant la fréquence d'apparition de chaque état parmi les mesures dans la fenêtre temporelle $F_i$ correspondante ; et
- descripteur $D_{11}$ caractérisant la probabilité de transition entre les états différents parmi les mesures dans la fenêtre temporelle $F_i$ correspondante.

Le jeu de descripteurs $J_p$ à calculer est formé de plusieurs descripteurs $D_j$ précités.

Selon l'invention, les descripteurs $D_j$ formant le jeu de descripteurs $J_p$ sont choisis en fonction du paramètre pour lequel ces descripteurs $D_j$ sont calculés.

De préférence, les descripteurs $D_j$ formant le jeu de descripteurs $J_p$ sont choisis en fonction du type du paramètre pour lequel ces descripteurs $D_j$ sont calculés.

À titre d'exemple, pour un paramètre de type analogique, le module d'apprentissage 32 calcule un jeu de descripteurs $J_1$ comportant le descripteur $D_1$ correspondant au maximum des mesures, le descripteur $D_2$ correspondant au minimum des mesures, le descripteur $D_3$ correspondant à la moyenne des mesures, le descripteur $D_4$ correspondant au passage par la moyenne des mesures, le descripteur $D_5$ correspondant à l'écart-type des mesures et le descripteur $D_9$ représentatif du comportement fréquentiel des mesures.

Pour un paramètre de type symbolique, le module d'apprentissage 32 calcule un jeu de descripteurs $J_2$ comportant le descripteur $D_{10}$ caractérisant la fréquence d'apparition des états et le descripteur $D_{11}$ caractérisant les transitions entre ces états.

Selon une variante de réalisation, le jeu de descripteurs $J_2$ comporte en outre un descripteur $D_{11}$ caractérisant la probabilité de transition entre les différents états.

Pour un paramètre de type quasi-symbolique, le module d'apprentissage 32 calcule un jeu de descripteurs $J_3$ comportant le descripteur $D_3$ correspondant à la moyenne des mesures, le descripteur $D_4$ correspondant au passage par la moyenne des mesures, le descripteur $D_5$ correspondant à l'écart-type des mesures et le descripteur $D_9$ représentatif du comportement fréquentiel des mesures.

Lors de l'étape 135 suivante, le module d'apprentissage 32 forme pour chaque fenêtre temporelle $F_i$, un vecteur

initial $V_i$ de descripteurs à partir des descripteurs $D_j$ calculés lors de l'étape 130.

En particulier, chaque composante du vecteur initial $V_i$ correspond à l'un des descripteurs $D_j$ calculés lors de l'étape 130. La dimension du vecteur initial $V_i$ correspond donc au nombre de descripteurs $D_j$ calculés lors de l'étape 130.

Lors de l'étape 140 suivante, le module d'apprentissage 32 normalise les vecteurs initiaux $V_i$. Pour ce faire, le module d'apprentissage 32 soustrait de chaque composante de ce vecteur la moyenne de cette même composante calculée à partir de tous les vecteurs initiaux $V_i$ et divise la valeur obtenue par l'écart-type de cette composante calculée également à partir de tous les vecteurs initiaux $V_i$.

Lors de l'étape 150 suivante, le module d'apprentissage 32 réduit la dimension de chaque vecteur initial $V_i$ pour obtenir un vecteur réduit $v_i$ dont la dimension est inférieure ou égale à celle du vecteur initial $V_i$.

Pour ce faire, le module d'apprentissage 32 utilise par exemple la méthode d'analyse en composantes principales (connue également sous le terme anglais « Principal Component Analysis » ou « PCA »). Cette méthode permet en particulier de déterminer un nombre réduit de combinaisons linéaires des descripteurs $D_j$.

Ainsi, chaque coordonnée du vecteur réduit $v_i$ correspond à une combinaison linéaire des descripteurs $D_j$ (correspondant à la projection de ce vecteur sur un des axes issus de l'analyse en composantes principales) calculés lors de l'étape 130.

Chaque vecteur réduit $v_i$ appartient ainsi à un espace de dimension réduite.

Puis, le module d'apprentissage 32 stocke des données permettant de définir l'espace de dimension réduite dans le module d'échange 36.

Lors de l'étape 160, le module d'apprentissage 32 détermine une frontière $f$ de comportement nominal du paramètre correspondant, en fonction des vecteurs réduits $v_i$ déterminés lors de l'étape 150.

La frontière $f$ délimite un domaine $D$ comportant la majorité des vecteurs réduits $v_i$ correspondants. Le pourcentage de vecteurs réduits $v_i$ à l'extérieur du domaine $D$ est un paramètre de réglage de la phase d'apprentissage. La dimension du domaine $D$ correspond à la dimension maximale des vecteurs réduits $v_i$.

Dans le sens de la présente invention, un vecteur appartient à un domaine $n$-dimensionnel, lorsque le point $n$-dimensionnel défini par ce vecteur est à l'intérieur de ce domaine.

La frontière $f$ est par exemple déterminée à l'aide de la méthode connue sous le terme anglais « One-Class Support Vector Machine » (ou « OC-SVM »).

En particulier, pour déterminer la frontière $f$, la méthode utilise un premier facteur $v$ et un deuxième facteur $\gamma$.

Le premier facteur $v$ détermine le pourcentage des vecteurs réduits $v_i$ d'une base d'apprentissage contenant des vecteurs associés à un comportement nominal et pouvant être à l'extérieur du domaine $D$.

Le premier facteur $v$ est par exemple sensiblement égal à 1%.

Le deuxième facteur $\gamma$ détermine la régularité de la frontière $f$ et est calculé à partir des vecteurs réduits $v_i$ de la base d'apprentissage à l'aide, par exemple, de l'heuristique de Jaakkola.

Lors de l'étape finale 170 de la phase d'apprentissage PA, le module d'apprentissage stocke des données numériques permettant de définir la frontière $f$ dans le module d'échange 36.

Ainsi, lorsque l'étape d'apprentissage PA est effectuée pour l'ensemble des paramètres, le module d'échange 36 comporte des données numériques définissant les frontières $f$ de comportement nominal de ces paramètres.

Préalablement à la phase de détection PD, les moyens de mesure 22 du satellite 12 prennent des mesures pendant un intervalle temporel de détection ID déterminé pour chaque paramètre.

La durée de l'intervalle temporel de détection ID pour un paramètre donné est par exemple égale à une journée.

Chaque intervalle temporel de détection ID est postérieur à l'intervalle temporel d'apprentissage IA correspondant.

Un organigramme des étapes de la phase de détection PD est illustré sur la figure 6.

Les étapes 210 à 250 de la phase de détection PD sont analogues aux étapes 110 à 150 de la phase d'apprentissage PA.

En particulier, lors de l'étape initiale 210 de la phase de détection PD, le module de détection 34 du dispositif de détection 30 acquiert les mesures du paramètre correspondant prises pendant l'intervalle de détection ID correspondant.

Lors de l'étape 220 suivante, le module de détection 34 divise l'intervalle temporel de détection ID en une pluralité de fenêtres temporelles $F_i$, la durée de chaque fenêtre temporelle $F_i$ est par exemple sensiblement égale à 100 min.

Lors de l'étape 230 suivante, pour chaque fenêtre temporelle $F_i$ obtenue, le module de détection 34 calcule un jeu de descripteurs $J_p$ en fonction des mesures acquises lors de l'étape 210. Le jeu de descripteurs $J_p$ utilisé est le même que celui utilisé lors de l'étape 130 de la phase d'apprentissage.

Comme expliqué précédemment, chaque jeu de descripteurs $J_p$ est choisi en fonction du type du paramètre correspondant.

Lors de l'étape 235 suivante, le module de détection 34 forme pour chaque fenêtre temporelle $F_i$, un vecteur initial $V_i$ de descripteurs à partir des descripteurs $D_j$ calculés lors de l'étape 230.

Lors de l'étape 240 suivante, le module de détection 34 normalise les vecteurs initiaux $V_i$, par exemple, en soustrayant de chaque composante de ces vecteurs la moyenne de cette même composante calculée à partir de tous les vecteurs initiaux $V_i$ et en divisant la valeur obtenue par l'écart-type de cette composante calculé également à partir de tous les vecteurs initiaux $V_i$.

Une autre possibilité consiste à utiliser les moyennes et écarts-types calculés lors de l'étape 140 de la phase d'apprentissage PA.

Lors de l'étape 250 suivante, le module de détection 34 réduit la dimension de chaque vecteur initial $V_i$ pour obtenir un vecteur réduit $v_i$ dont la dimension est inférieure ou égale à celle du vecteur initial $V_i$.

En particulier, lors de cette étape, le module de détection 34 projette chaque vecteur initial $V_i$ sur l'espace de dimension réduite déterminé lors de l'étape 150 de la phase d'apprentissage pour obtenir un vecteur réduit $v_i$ correspondant à cette projection dans cet espace.

Pour ce faire, le module de détection 34 acquiert du module d'échange 36 les données définissant l'espace de dimension réduite.

Lors de l'étape 260 suivante, le module de détection 34 acquiert les données numériques définissant la frontière $f$ de comportement nominal du paramètre correspondant. Ces données sont issues du module d'échange 36.

Lors de l'étape finale 270 de la phase de détection PD, le module de détection 34 détermine l'appartenance de chacun des vecteurs réduits $v_i$ au domaine $D$ délimité par la frontière $f$.

Lorsqu'un vecteur réduit $v_i$ est à l'extérieur du domaine $D$, c'est-à-dire, à l'extérieur de la frontière $f$, le module de détection 34 génère une alerte à l'utilisateur signalant un comportement atypique du paramètre correspondant analysé dans la fenêtre temporelle $F_i$ correspondant à ce vecteur réduit $v_i$.

La phase de détection PD est alors répétée pour chacun des paramètres, de préférence à chaque réception de nouvelles mesures de ce paramètre ou à un autre rythme périodique jugé le plus opportun.

On conçoit alors que la présente invention présente un certain nombre d'avantages.

En effet, le procédé de détection selon l'invention intègre une étape de réduction de la dimension de chaque vecteur initial $V_i$ de descripteurs pour obtenir un vecteur réduit $v_i$ d'une dimension réduite. Ceci permet d'alléger considérablement le calcul de la frontière $f$ ainsi que l'appartenance de chaque vecteur réduit $v_i$ au domaine $D$ délimité par la frontière $f$ déjà calculée, lorsqu'un grand nombre de descripteurs $D_j$ est utilisé. Ce nombre est par exemple supérieur à 5.

En outre, après chaque phase d'apprentissage PA, seules les données numériques définissant la frontière $f$ sont stockées. Contrairement aux méthodes existantes, la totalité des vecteurs de descripteurs acquis pendant l'intervalle d'apprentissage IA ne sont pas stockés et ne sont pas utilisés lors de la phase de détection PD. Ceci permet alors d'augmenter la vitesse du traitement des mesures acquises pendant l'intervalle de détection ID.

De plus, le choix des descripteurs $D_j$ en fonction du type du paramètre, permet de rendre la détection d'un comportement atypique d'un paramètre efficace pour tout type de paramètre et notamment, pour un paramètre de type symbolique ou de type quasi-symbolique.

Finalement, l'utilisation des descripteurs $D_j$ fréquentiels permet de détecter un comportement atypique d'un paramètre dans le domaine fréquentiel ce qui n'est pas le cas des méthodes existantes.

D'autres exemples de réalisation de la présente invention sont également possibles.

Ainsi, il est clair que l'invention ne se limite pas à la détection d'un comportement atypique d'un paramètre mesuré par un satellite. Il est possible d'appliquer le procédé selon l'invention à tout autre domaine utilisant les techniques similaires de télémesure.

Ainsi, il est possible d'appliquer l'invention pour le traitement des paramètres de télémesure acquis par tout autre engin mobile tel qu'un aéronef, un aérostat, un drone ou un véhicule terrestre, ou encore par une station fixe au sol ou dans les océans.

Dans les exemples précités, les paramètres mesurés correspondent par exemple à des paramètres relatifs au fonctionnement de l'engin mobile correspondant ou de la station correspondante, ou à des paramètres relatifs au milieu environnant cet engin ou cette station.

Finalement, le dispositif mettant en œuvre le procédé selon l'invention peut être disposé de façon distante de l'engin mobile correspondant ou de la station correspondante, ou peut être encore embarqué dans cet engin ou associé à cette station.

**Revendications**

**1.** Procédé de détection d'un comportement atypique de paramètres de télémesure, chaque paramètre étant mesuré pendant un intervalle temporel d'apprentissage (IA) et un intervalle temporel de détection (ID) postérieur à l'intervalle temporel d'apprentissage (IA), le procédé comportant pour chaque paramètre une phase d'apprentissage (PA) et une phase de détection (PD) ;
la phase d'apprentissage (PA) comportant la détermination d'une frontière (*f*) de comportement nominal du paramètre correspondant à partir des mesures de ce paramètre acquises pendant l'intervalle d'apprentissage (IA) ;
la phase de détection (PD) comportant les étapes suivantes :

- diviser (220) l'intervalle temporel de détection (ID) en une pluralité de fenêtres temporelles ($F_i$) ;
- pour chaque fenêtre temporelle ($F_i$) obtenue, calculer (230) un jeu de descripteurs ($D_j$) représentatifs du comportement du paramètre correspondant, les descripteurs ($D_j$) étant calculés en fonction des mesures de ce paramètre dans cette fenêtre temporelle ($F_i$), et former un vecteur initial ($V_i$) de descripteurs ($D_j$) à partir des descripteurs ($D_j$) calculés ;
- normaliser (240) les vecteurs initiaux ($V_i$) de descripteurs ($D_j$) ;
- pour chaque vecteur initial ($V_i$) de descripteurs ($D_j$), réduire (250) la dimension de ce vecteur initial ($V_i$) de descripteurs ($D_j$) pour former un vecteur réduit ($v_i$) de descripteurs ($D_j$), chaque composante du vecteur réduit ($v_i$) de descripteurs ($D_j$) correspondant à une combinaison linéaire des composantes du vecteur initial ($V_i$) de descripteurs ($D_j$) à partir duquel ce vecteur réduit ($v_i$) de descripteurs ($D_j$) a été formé ;
- déterminer (270) l'appartenance de chaque vecteur réduit ($v_i$) de descripteurs ($D_j$) à un domaine (D) délimité par la frontière (f) de comportement nominal du paramètre correspondant ;
- lorsqu'un vecteur réduit ($v_i$) de descripteurs ($D_j$) est à l'extérieur du domaine (D), générer une alerte correspondant à un comportement atypique du paramètre correspondant dans la fenêtre temporelle ($F_i$) correspondant à ce vecteur réduit ($v_i$) de descripteurs ($D_j$).

2. Procédé selon la revendication 1, dans lequel la phase d'apprentissage (PA) comporte les étapes suivantes :

- diviser (120) l'intervalle temporel d'apprentissage (IA) en une pluralité de fenêtres temporelles ($F_i$) ;
- pour chaque fenêtre temporelle ($F_i$) obtenue, calculer (130) un jeu de descripteurs ($J_p$) représentatifs du comportement du paramètre correspondant, les descripteurs ($D_j$) étant calculés en fonction des mesures de ce paramètre dans cette fenêtre temporelle ($F_i$), et former un vecteur initial ($V_i$) de descripteurs ($D_j$) à partir des descripteurs ($D_j$) calculés ;
- normaliser (140) les vecteurs initiaux ($V_i$) de descripteurs ($D_j$) ;
- pour chaque vecteur initial ($V_i$) de descripteurs ($D_j$), réduire (150) la dimension de ce vecteur initial ($V_i$) de descripteurs ($D_j$) pour former un vecteur réduit ($v_i$) de descripteurs ($D_j$), chaque composante du vecteur réduit ($v_i$) de descripteurs ($D_j$) correspondant à une combinaison linéaire des composantes du vecteur initial ($V_i$) de descripteurs ($D_j$) à partir duquel ce vecteur réduit ($v_i$) de descripteurs ($D_j$) a été formé ;
- déterminer (160) une frontière (f) de comportement nominal du paramètre correspondant en fonction des vecteurs réduits ($v_i$) de descripteurs ($D_j$) correspondants, ladite frontière (f) délimitant un domaine (D) comportant une majorité desdits vecteurs réduits ($v_i$).

3. Procédé selon la revendication 1 ou 2, dans lequel chaque paramètre est associé à un type, chaque type étant choisi dans un groupe consistant en :

- type analogique pour un paramètre dont chaque mesure correspond à une valeur numérique choisie dans un intervalle de valeurs numériques prédéterminé pour le paramètre correspondant ;
- type symbolique pour un paramètre dont chaque mesure correspond à une valeur choisie parmi un nombre fini d'états prédéterminés pour le paramètre correspondant ;
- type quasi-symbolique pour un paramètre dont chaque mesure correspond à une valeur numérique choisie parmi un nombre fini d'états numériques prédéterminés pour le paramètre correspondant ou à une valeur numérique choisie dans au moins un intervalle de valeurs numériques comportant l'un desdits états numériques.

4. Procédé selon la revendication 3, dans lequel chaque jeu de descripteurs ($J_p$) est choisi en fonction du type du paramètre pour lequel ce jeu ($J_p$) est calculé.

5. Procédé selon la revendication 3 ou 4, dans lequel le jeu de descripteurs ($J_p$) pour chaque paramètre de type symbolique ou de type quasi-symbolique comprend des descripteurs ($D_j$) calculés en fonction de la fréquence d'apparition de chaque état dans la fenêtre temporelle ($F_i$) correspondante et/ou de la probabilité de transition entre les différents états dans la fenêtre temporelle ($F_i$) correspondante.

6. Procédé selon l'une quelconque des revendications précédentes, dans lequel le jeu de descripteurs ($J_p$) pour au moins un type de paramètre comprend au moins un descripteur fréquentiel représentatif du comportement fréquentiel du paramètre correspondant.

**7.** Procédé selon la revendication 6, dans lequel le descripteur fréquentiel est calculé en fonction de l'énergie contenue dans plusieurs bandes de fréquence des mesures du paramètre correspondant dans la fenêtre temporelle ($F_i$) correspondante.

**8.** Procédé selon l'une quelconque des revendications précédentes, dans lequel le jeu de descripteurs ($J_p$) pour au moins un type de paramètre comprend au moins un descripteur représentatif du nombre de passages par une valeur moyenne des mesures du paramètre correspondant dans la fenêtre temporelle ($F_i$) correspondante.

**9.** Procédé selon l'une quelconque des revendications précédentes, dans lequel la frontière ($f$) de comportement nominal de chaque paramètre est déterminée en fonction d'un premier facteur ($v$) déterminant le pourcentage des vecteurs réduits autorisés à être à l'extérieur du domaine ($D$) délimité par cette frontière ($f$), et d'un deuxième facteur ($\gamma$) déterminant la régularité de la frontière ($f$).

**10.** Procédé selon l'une quelconque des revendications précédentes, dans lequel chaque paramètre est mesuré par des moyens de mesure (22) embarqués dans un satellite (12).

**11.** Procédé selon la revendication 10, dans lequel les mesures d'au moins un paramètre sont analysées par un centre de traitement (14) distant du satellite (12) ou embarqué dans celui-ci.

**12.** Procédé selon l'une quelconque des revendications précédentes, dans lequel la réduction de la dimension de chaque vecteur initial ($V_i$) de descripteurs ($D_j$) lors de la phase de détection (PD) comprend la projection de ce vecteur initial ($V_i$) sur un espace de dimension réduite déterminé par les vecteurs réduits ($v_i$) obtenus lors la réduction de la dimension de chaque vecteur initial ($V_i$) de descripteurs ($D_j$) lors de la phase d'apprentissage (PA).

**13.** Procédé selon l'une quelconque des revendications précédentes, dans lequel :

- la normalisation des vecteurs initiaux ($V_i$) de descripteurs ($D_j$) lors de la phase d'apprentissage (PA) comprend le calcul des moyennes et des écart-types des composantes de ces vecteurs initiaux ($V_i$) de descripteurs ($D_j$) ;
- la normalisation des vecteurs initiaux ($V_i$) de descripteurs ($D_j$) lors de la phase de détection (PD) s'effectue à partir des moyennes et des écart-types calculés lors de la phase d'apprentissage (PA).

**14.** Produit programme d'ordinateur comportant des instructions logicielles qui, lorsque mis en œuvre par un équipement informatique, met en œuvre le procédé selon l'une quelconque des revendications précédentes.

**15.** Dispositif (30) de détection d'un comportement atypique de paramètres de télémesure, chaque paramètre étant mesuré pendant un intervalle temporel d'apprentissage (IA) et un intervalle temporel de détection (ID) postérieur à l'intervalle temporel d'apprentissage (IA), le dispositif (30) comportant un module d'apprentissage (32) et un module de détection (34) ;
pour chaque paramètre, le module d'apprentissage (32) étant apte à déterminer une frontière ($f$) de comportement nominal du paramètre correspondant à partir des mesures de ce paramètre acquises pendant l'intervalle d'apprentissage (IA) ;
pour chaque paramètre, le module de détection (34) étant apte à :

- diviser l'intervalle temporel de détection (ID) en une pluralité de fenêtres temporelles ($F_i$) ;
- pour chaque fenêtre temporelle ($F_i$) obtenue, calculer un jeu de descripteurs ($D_j$) représentatifs du comportement du paramètre correspondant, les descripteurs ($D_j$) étant calculés en fonction des mesures de ce paramètre dans cette fenêtre temporelle ($F_i$), et former un vecteur initial ($V_i$) de descripteurs ($D_j$) à partir des descripteurs ($D_j$) calculés ;
- normaliser les vecteurs initiaux ($V_i$) de descripteurs ($D_j$) ;
- pour chaque vecteur initial ($V_i$) de descripteurs ($D_j$), réduire la dimension de ce vecteur initial ($V_i$) de descripteurs ($D_j$) pour former un vecteur réduit ($v_i$) de descripteurs ($D_j$), chaque composante du vecteur réduit ($v_i$) de descripteurs ($D_j$) correspondant à une combinaison linéaire des composantes du vecteur initial ($V_i$) de descripteurs ($D_j$) à partir duquel ce vecteur réduit ($v_i$) de descripteurs ($D_j$) a été formé ;
- déterminer l'appartenance de chaque vecteur réduit ($v_i$) de descripteurs ($D_j$) à un domaine ($D$) délimité par la frontière ($f$) de comportement nominal du paramètre correspondant ;
- lorsqu'un vecteur réduit ($v_i$) de descripteurs ($D_j$) est à l'extérieur du domaine ($D$), générer une alerte correspondant à un comportement atypique du paramètre correspondant dans la fenêtre temporelle ($F_i$) correspondant à ce vecteur réduit ($v_i$) de descripteurs ($D_j$).

**Patentansprüche**

1.  Verfahren zum Erkennen eines atypischen Verhaltens von Telemetrieparametern, wobei jeder Parameter während eines Lernzeitintervalls (IA) und eines Erkennungszeitintervalls (ID) nach dem Lernzeitintervall (IA) gemessen wird, wobei das Verfahren für jeden Parameter eine Lernphase (PA) und eine Erkennungsphase (PD) umfasst; wobei die Lernphase (PA) das Bestimmen einer Grenze ($f$) nominalen Verhaltens des entsprechenden Parameters auf Grundlage der Messungen dieses Parameters umfasst, die während des Lernintervalls (IA) erfasst wurden; wobei die Erkennungsphase (PD) die folgenden Schritte umfasst:

    - Unterteilen (220) des Erkennungszeitintervalls (ID) in eine Vielzahl von Zeitfenstern ($F_i$);
    - Berechnen (230) eines Satzes von Deskriptoren ($D_j$) für jedes erhaltene Zeitfenster ($F_i$), die für das Verhalten des entsprechenden Parameters repräsentativ sind, wobei die Deskriptoren ($D_j$) in Abhängigkeit von den Messungen dieses Parameters in diesem Zeitfenster ($F_i$) berechnet werden, und Bilden eines Anfangsvektors ($V_i$) von Deskriptoren ($D_j$) auf Grundlage der berechneten Deskriptoren ($D_j$);
    - Normieren (240) der Anfangsvektoren ($V_i$) von Deskriptoren ($D_j$);
    - Reduzieren (250) der Dimension dieses Anfangsvektors ($V_i$) von Deskriptoren ($D_j$) für jeden Anfangsvektor ($V_i$) von Deskriptoren ($D_j$), um einen reduzierten Vektor ($v_i$) von Deskriptoren ($D_j$) zu bilden, wobei jede Komponente des reduzierten Vektors ($v_i$) von Deskriptoren ($D_j$) einer linearen Kombination der Komponenten des Anfangsvektors ($V_i$) von Deskriptoren ($D_j$) entspricht, auf dessen Grundlage dieser reduzierte Vektor ($v_i$) von Deskriptoren ($D_j$) gebildet wurde;
    - Bestimmen (270) der Zugehörigkeit jedes reduzierten Vektors ($v_i$) von Deskriptoren ($D_j$) zu einer Domäne ($D$), die von der Grenze ($f$) nominalen Verhaltens des entsprechenden Parameters begrenzt wird;
    - Erzeugen eines Alarms, der einem atypischen Verhalten des entsprechenden Parameters in dem diesem reduzierten Vektor ($v_i$) von Deskriptoren ($D_j$) entsprechenden Zeitfenster ($F_i$) entspricht, wenn ein reduzierter Vektor ($v_i$) von Deskriptoren ($D_j$) außerhalb der Domäne ($D$) liegt.

2.  Verfahren nach Anspruch 1, wobei die Lernphase (PA) die folgenden Schritte umfasst:

    - Unterteilen (120) des Lernzeitintervalls (IA) in eine Vielzahl von Zeitfenstern ($F_i$);
    - Berechnen (130) eines Satzes von Deskriptoren ($J_p$) für jedes erhaltene Zeitfenster ($F_i$), die für das Verhalten des entsprechenden Parameters repräsentativ sind, wobei die Deskriptoren ($D_j$) in Abhängigkeit von den Messungen dieses Parameters in diesem Zeitfenster ($F_i$) berechnet werden, und Bilden eines Anfangsvektors ($V_i$) von Deskriptoren ($D_j$) auf Grundlage der berechneten Deskriptoren ($D_j$);
    - Normieren (140) der Anfangsvektoren ($V_i$) von Deskriptoren ($D_j$);
    - Reduzieren (150) der Dimension dieses Anfangsvektors ($V_i$) von Deskriptoren ($D_j$) für jeden Anfangsvektor ($V_i$) von Deskriptoren ($D_j$), um einen reduzierten Vektor ($v_i$) von Deskriptoren ($D_j$) zu bilden, wobei jede Komponente des reduzierten Vektors ($v_i$) von Deskriptoren ($D_j$) einer linearen Kombination der Komponenten des Anfangsvektors ($V_i$) von Deskriptoren ($D_j$) entspricht, auf dessen Grundlage dieser reduzierte Vektor ($v_i$) von Deskriptoren ($D_j$) gebildet wurde;
    - Bestimmen (160) einer Grenze ($f$) nominalen Verhaltens des entsprechenden Parameters in Abhängigkeit von den entsprechenden reduzierten Vektoren ($v_i$) von Deskriptoren ($D_j$), wobei die Grenze ($f$) eine Domäne ($D$) begrenzt, die eine Mehrheit der reduzierten Vektoren ($v_i$) umfasst.

3.  Verfahren nach Anspruch 1 oder 2, wobei jeder Parameter einem Typ zugeordnet ist, wobei jeder Typ aus einer Gruppe ausgewählt ist bestehend aus:

    - analogem Typ für einen Parameter, von dem jede Messung einem numerischen Wert entspricht, der aus einem vorbestimmten Intervall von numerischen Werten für den entsprechenden Parameter ausgewählt ist;
    - symbolischem Typ für einen Parameter, von dem jede Messung einem Wert entspricht, der aus einer finiten Anzahl vorbestimmter Zustände für den entsprechenden Parameter ausgewählt ist;
    - quasi-symbolischem Typ für einen Parameter, von dem jede Messung einem numerischen Wert, der aus einer finiten Anzahl vorbestimmter numerischer Zustände für den entsprechenden Parameter ausgewählt ist, oder einem numerischen Wert entspricht, der aus mindestens einem Intervall von numerischen Werten ausgewählt ist, welches einen der numerischen Zustände umfasst.

4.  Verfahren nach Anspruch 3, wobei jeder Satz von Deskriptoren ($J_p$) in Abhängigkeit vom Typ des Parameters ausgewählt wird, für den dieser Satz ($J_p$) berechnet wird.

**5.** Verfahren nach Anspruch 3 oder 4, wobei der Satz von Deskriptoren ($J_p$) für jeden Parameter vom symbolischen Typ oder vom quasi-symbolischen Typ Deskriptoren ($D_j$) umfasst, die in Abhängigkeit von der Frequenz des Auftretens jedes Zustands im entsprechenden Zeitfenster ($F_i$) und/oder der Wahrscheinlichkeit des Übergangs zwischen den unterschiedlichen Zuständen im entsprechenden Zeitfenster ($F_i$) berechnet werden.

**6.** Verfahren nach einem der vorstehenden Ansprüche, wobei der Satz von Deskriptoren ($J_p$) für mindestens einen Parametertyp mindestens einen Frequenzdeskriptor umfasst, der für das Frequenzverhalten des entsprechenden Parameters repräsentativ ist.

**7.** Verfahren nach Anspruch 6, wobei der Frequenzdeskriptor in Abhängigkeit von der Energie berechnet wird, die in mehreren Frequenzbändern der Messungen des entsprechenden Parameters im entsprechenden Zeitfenster ($F_i$) enthalten ist.

**8.** Verfahren nach einem der vorstehenden Ansprüche, wobei der Satz von Deskriptoren ($J_p$) für mindestens einen Parametertyp mindestens einen Deskriptor umfasst, der für die Anzahl von Durchgängen durch einen Mittelwert der Messungen des entsprechenden Parameters im entsprechenden Zeitfenster ($F_i$) repräsentativ ist.

**9.** Verfahren nach einem der vorstehenden Ansprüche, wobei die Grenze ($f$) nominalen Verhaltens jedes Parameters in Abhängigkeit von einem ersten Faktor ($v$), der den Prozentsatz der reduzierten Vektoren bestimmt, die außerhalb der von dieser Grenze ($f$) begrenzten Domäne ($D$) liegen dürfen, und einem zweiten Faktor ($\gamma$) bestimmt wird, der die Regelmäßigkeit der Grenze ($f$) bestimmt.

**10.** Verfahren nach einem der vorstehenden Ansprüche, wobei jeder Parameter von Messmitteln (22) gemessen wird, die sich an Bord eines Satelliten (12) befinden.

**11.** Verfahren nach Anspruch 10, wobei die Messungen von mindestens einem Parameter von einem Verarbeitungszentrum (14) analysiert werden, das sich vom Satelliten (12) entfernt oder an Bord desselben befindet.

**12.** Verfahren nach einem der vorstehenden Ansprüche, wobei das Reduzieren der Dimension jedes Anfangsvektors ($V_i$) von Deskriptoren ($D_j$) bei der Erkennungsphase (PD) das Projizieren dieses Anfangsvektors ($V_i$) auf einen Raum von reduzierter Dimension umfasst, der von den reduzierten Vektoren ($v_i$) bestimmt wird, die beim Reduzieren der Dimension jedes Anfangsvektors ($V_i$) von Deskriptoren ($D_j$) bei der Lernphase (PA) erhalten wurden.

**13.** Verfahren nach einem der vorstehenden Ansprüche, wobei:

- das Normieren der Anfangsvektoren ($V_i$) von Deskriptoren ($D_j$) bei der Lernphase (PA) das Berechnen der Mittelwerte und der Standardabweichungen der Komponenten dieser Anfangsvektoren ($V_i$) von Deskriptoren ($D_j$) umfasst;
- das Normieren der Anfangsvektoren ($V_i$) von Deskriptoren ($D_j$) bei der Erkennungsphase (PD) auf Grundlage der Mittelwerte und der Standardabweichungen erfolgt, die bei der Lernphase (PA) berechnet wurden.

**14.** Computerprogrammprodukt, das Softwareanweisungen umfasst, das, wenn dieselben von einer IT-Ausrüstung umgesetzt werden, das Verfahren nach einem der vorstehenden Ansprüche umsetzt.

**15.** Vorrichtung (30) zum Erkennen eines atypischen Verhaltens von Telemetrieparametern, wobei jeder Parameter während eines Lernzeitintervalls (IA) und eines Erkennungszeitintervalls (ID) nach dem Lernzeitintervall (IA) gemessen wird, wobei die Vorrichtung (30) ein Lernmodul (32) und ein Erkennungsmodul (34) umfasst; wobei das Lernmodul (32) in der Lage ist, für jeden Parameter eine Grenze ($f$) nominalen Verhaltens des entsprechenden Parameters auf Grundlage der Messungen dieses Parameters, die während des Lernintervalls (IA) erfasst wurden, zu bestimmen; wobei das Erkennungsmodul (34) in der Lage ist, für jeden Parameter:

- das Erkennungszeitintervall (ID) in eine Vielzahl von Zeitfenstern ($F_i$) zu unterteilen;
- für jedes erhaltene Zeitfenster ($F_i$) einen Satz von Deskriptoren ($D_j$) zu berechnen, die für das Verhalten des entsprechenden Parameters repräsentativ sind, wobei die Deskriptoren ($D_j$) in Abhängigkeit von den Messungen dieses Parameters in diesem Zeitfenster ($F_i$) berechnet werden, und auf Grundlage der berechneten Deskriptoren ($D_j$) einen Anfangsvektor ($V_i$) von Deskriptoren ($D_j$) zu bilden;
- die Anfangsvektoren ($V_i$) von Deskriptoren ($D_j$) zu normieren;

- für jeden Anfangsvektor ($V_i$) von Deskriptoren ($D_j$) die Dimension dieses Anfangsvektors ($V_i$) von Deskriptoren ($D_j$) zu reduzieren, um einen reduzierten Vektor ($v_i$) von Deskriptoren ($D_j$) zu bilden, wobei jede Komponente des reduzierten Vektors ($v_i$) von Deskriptoren ($D_j$) einer linearen Kombination der Komponenten des Anfangsvektors ($V_i$) von Deskriptoren ($D_j$) entspricht, auf dessen Grundlage dieser reduzierte Vektor ($v_i$) von Deskriptoren ($D_j$) gebildet wurde;
- die Zugehörigkeit jedes reduzierten Vektors ($v_i$) von Deskriptoren ($D_j$) zu einer Domäne ($D$), die von der Grenze ($f$) nominalen Verhaltens des entsprechenden Parameters begrenzt wird, zu bestimmen;
- eine Alarm zu erzeugen, der einem atypischen Verhalten des entsprechenden Parameters in dem diesem reduzierten Vektor ($v_i$) von Deskriptoren ($D_j$) entsprechenden Zeitfenster ($F_i$) entspricht, wenn ein reduzierter Vektor ($v_i$) von Deskriptoren ($D_j$) außerhalb der Domäne ($D$) liegt.

**Claims**

1. A method for detecting an atypical behavior of telemetry parameters, each parameter being measured during a learning time interval (IA) and a detection time interval (ID) subsequent to the learning time interval (IA), the method including for each parameter a learning phase (PA) and a detection phase (PD);
the learning phase (PA) including the determination of a nominal behavior boundary ($f$) of the corresponding parameter from the measurements of this parameter acquired during the learning interval (IA);
the detection phase (PD) including the following steps of:

   - dividing (220) the detection time interval (ID) into a plurality of time frames ($F_i$);
   - for each obtained time frame ($F_i$), calculating (230) a set of descriptors ($D_j$) representative of the behavior of the corresponding parameter, the descriptors ($D_j$) being calculated according to the measurements of this parameter in this time frame ($F_i$), and forming an initial vector ($V_i$) of descriptors ($D_j$) from the calculated descriptors ($D_j$);
   - normalizing (240) the initial vectors ($V_i$) of descriptors ($D_j$);
   - for each initial vector ($V_i$) of descriptors ($D_j$), reducing (250) the dimension of this initial vector ($V_i$) of descriptors ($D_j$) to form a reduced vector ($v_i$) of descriptors ($D_j$), each component of the reduced vector ($v_i$) of descriptors ($D_j$) corresponding to a linear combination of the components of the initial vector ($V_i$) of descriptors ($D_j$) from which this reduced vector ($v_i$) of descriptors ($D_j$) has been formed;
   - determining (270) the belonging of each reduced vector ($v_i$) of descriptors ($D_j$) to a domain ($D$) delimited by the nominal behavior boundary ($f$) of the corresponding parameter;
   - when a reduced vector ($v_i$) of descriptors ($D_j$) is outside the field ($D$), generating a warning corresponding to an atypical behavior of the corresponding parameter in the time frame ($F_i$) corresponding to this reduced vector ($v_i$) of descriptors ($D_j$).

2. The detection method according to claim 1, wherein the learning phase (PA) includes the following steps of:

   - dividing (120) the learning time interval (IA) into a plurality of time frames ($F_i$);
   - for each obtained time frame ($F_i$), calculating (130) a set of descriptors ($J_p$) representative of the behavior of the corresponding parameter, the descriptors ($D_j$) being calculated according to the measurements of this parameter in this time frame ($F_i$), and forming an initial vector ($V_i$) of descriptors ($D_j$) from the calculated descriptors ($D_j$);
   - normalizing (140) the initial vectors ($V_i$) of descriptors ($D_j$);
   - for each initial vector ($V_i$) of descriptors ($D_j$), reducing (150) the dimension of this initial vector ($V_i$) of descriptors ($D_j$) to form a reduced vector ($v_i$) of descriptors ($D_j$), each component of the reduced vector ($v_i$) of descriptors ($D_j$) corresponding to a linear combination of the components of the initial vector ($V_i$) of descriptors ($D_j$) from which this reduced vector ($v_i$) of descriptors ($D_j$) has been formed;
   - determining (160) a nominal behavior boundary ($f$) of the corresponding parameter according to the corresponding reduced vectors ($v_i$) of descriptors ($D_j$), said boundary ($f$) delimiting a field ($D$) including a majority of said reduced vectors ($v_i$).

3. The detection method according to claim 1 or 2, wherein each parameter is associated to a type, each type being selected from the group consisting of:

   - analog type for a parameter for which each measurement corresponds to a numerical value selected within a predetermined interval of numerical values for the corresponding parameter;

- symbolic type for a parameter for which each measurement corresponds to a value selected amongst a finite number of predetermined states for the corresponding parameter;
- quasi-symbolic type for a parameter for which each measurement corresponds to a numerical value selected amongst a finite number of predetermined numerical states for the corresponding parameter or to a numerical value selected within at least one interval of numerical values including one of said numerical states.

4. The detection method according to claim 3, wherein each set of descriptors ($J_p$) is selected according to the type of the parameter for which this set ($J_p$) is calculated.

5. The detection method according to claim 3 or 4, wherein the set of descriptors ($J_p$) for each symbolic type or quasi-symbolic type parameter comprises descriptors ($D_j$) calculated according to the frequency of occurrence of each state in the corresponding time frame ($F_i$) and/or the probability of transition between the different states in the corresponding time frame ($F_i$).

6. The detection method according to any one of the preceding claims, wherein the set of descriptors ($J_p$) for at least one parameter type comprises at least one frequency descriptor representative of the frequency behavior of the corresponding parameter.

7. The detection method according to claim 6, wherein the frequency descriptor is calculated according to the energy contained in several frequency bands of the measurements of the corresponding parameter in the corresponding time frame ($F_i$).

8. The detection method according to any one of the preceding claims, wherein the set of descriptors ($J_p$) for at least one parameter type comprises at least one descriptor representative of the number of passages through an average value of the measurements of the corresponding parameter in the corresponding time frame ($F_i$).

9. The detection method according to any one of the preceding claims, wherein the nominal behavior boundary ($f$) of each parameter is determined according to a first factor ($v$) determining the percentage of the reduced vectors authorized to be outside the domain ($D$) delimited by this boundary ($f$), and a second factor ($\gamma$) determining the regularity of the boundary ($f$).

10. The detection method according to any one of the preceding claims, wherein each parameter is measured by measuring means (22) embedded in a satellite (12).

11. The detection method according to claim 10, wherein the measurements of at least one parameter are analyzed by a processing center (14) remote from the satellite (12) or embedded in the latter.

12. The detection method according to any one of the preceding claims, wherein the reduction of the dimension of each initial vector ($V_i$) of descriptors ($D_j$) during the detection phase (PD) comprises the projection of this initial vector ($V_i$) on a space with a reduced dimension determined by the reduced vectors ($v_i$) obtained during the reduction of the dimension of each initial vector ($V_i$) of descriptors ($D_j$) during the learning phase (PA).

13. The detection method according to any one of the preceding claims, wherein:

- the normalization of the initial vectors ($V_i$) of descriptors ($D_j$) during the learning phase (PA) comprises the calculation of the averages and the standard deviations of the components of these initial vectors ($V_i$) of descriptors ($D_j$);
- the normalization of the initial vectors ($V_i$) of descriptors ($D_j$) during the detection phase (PD) is performed from the averages and the standard deviations calculated during the learning phase (PA).

14. A computer program product including software instruction which, when implemented by a computer equipment, implements the detection method according to any one of the preceding claims.

15. A device (30) for detecting an atypical behavior of telemetry parameters, each parameter being measured during a learning time interval (IA) and a detection time interval (ID) subsequent to the learning time interval (IA), the device (30) including a learning module (32) and a detection module (34);
for each parameter, the learning module (32) being adapted to determine a nominal behavior boundary ($f$) of the corresponding parameter from the measurements of this parameter acquired during the learning interval (IA);

for each parameter, the detection module (34) being adapted to:

- divide the detection time interval (ID) into a plurality of time frames ($F_i$);
- for each obtained time frame ($F_i$), calculate a set of descriptors ($D_j$) representative of the behavior of the corresponding parameter, the descriptors ($D_j$) being calculated according to the measurements of this parameter in this time frame ($F_i$), and form an initial vector ($V_i$) of descriptors ($D_j$) from the calculated descriptors ($D_j$);
- normalize the initial vectors ($V_i$) of descriptors ($D_j$);
- for each initial vector ($V_i$) of descriptors ($D_j$), reduce the dimension of this initial vector ($V_i$) of descriptors ($D_j$) to form a reduced vector ($v_i$) of descriptors ($D_j$), each component of the reduced vector ($v_i$) of descriptors ($D_j$) corresponding to a linear combination of the components of the initial vector ($V_i$) of descriptors ($D_j$) from which this reduced vector ($v_i$) of descriptors ($D_j$) has been formed;
- determine the belonging of each reduced vector ($v_i$) of descriptors ($D_j$) to a domain ($D$) delimited by the nominal behavior boundary ($f$) of the corresponding parameter;
- when a reduced vector ($v_i$) of descriptors ($D_j$) is outside the field ($D$), generate a warning corresponding to an atypical behavior of the corresponding parameter in the time frame ($F_i$) corresponding to this reduced vector ($v_i$) of descriptors ($D_j$).

FIG.1

FIG.2

FIG.3

FIG.4

PA

```
┌─────────────────────────────────────────────────┐
│   ┌─────────────────────────────────────────┐    │
│   │         Acquérir des mesures            │─110 │
│   └─────────────────────────────────────────┘    │
│                     │                            │
│                     ▼                            │
│   ┌─────────────────────────────────────────┐    │
│   │      Diviser l'intervalle temporel IA   │─120 │
│   └─────────────────────────────────────────┘    │
│                     │                            │
│                     ▼                            │
│   ┌─────────────────────────────────────────┐    │
│   │      Calculer un jeu de descripteurs    │─130 │
│   └─────────────────────────────────────────┘    │
│                     │                            │
│                     ▼                            │
│   ┌─────────────────────────────────────────┐    │
│   │         Former des vecteurs $V_i$       │─135 │
│   └─────────────────────────────────────────┘    │
│                     │                            │
│                     ▼                            │
│   ┌─────────────────────────────────────────┐    │
│   │            Normaliser $V_i$             │─140 │
│   └─────────────────────────────────────────┘    │
│                     │                            │
│                     ▼                            │
│   ┌─────────────────────────────────────────┐    │
│   │ Réduire la dimension de $V_i$ et stocker│─150 │
│   │ les données définissant l'espace de     │    │
│   │ dimension réduite                       │    │
│   └─────────────────────────────────────────┘    │
│                     │                            │
│                     ▼                            │
│   ┌─────────────────────────────────────────┐    │
│   │          Déterminer la frontière f      │─160 │
│   └─────────────────────────────────────────┘    │
│                     │                            │
│                     ▼                            │
│   ┌─────────────────────────────────────────┐    │
│   │ Stocker les données définissant la      │─170 │
│   │ frontière f                             │    │
│   └─────────────────────────────────────────┘    │
│                     │                            │
└─────────────────────┼────────────────────────────┘
                      │
```

## FIG.5

PD

| Acquérir des mesures | 210 |

| Diviser l'intervalle temporel ID | 220 |

| Calculer un jeu de descripteurs | 230 |

| Former des vecteurs $V_i$ | 235 |

| Normaliser $V_i$ | 240 |

| Projeter $V_i$ sur l'espace de dimension réduite calculé lors de l'étape 150 | 250 |

| Acquérir les données définissant la frontière f | 260 |

| Générer une alerte si $V_i$ est à l'extérieur de la frontière f | 270 |

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013010569 A1